# EUROPEAN PATENT SPECIFICATION

(11) **EP 3 053 886 B1**
(45) Date of publication and mention of the grant of the patent: **07.12.2022**
(21) Application number: 16153299.9
(22) Date of filing: 29.01.2016
(51) Int. Cl.: C03C 3/097, C03C 4/00, C03C 4/02, C03C 4/20, C03C 10/00, C03C 21/00, A61C 13/083

(54) **METHOD FOR THE PRODUCTION OF A FORM BODY COMPRISING OR CONTAINING A LITHIUM SILICATE GLASS CERAMIC AS WELL AS FORM BODIES**
VERFAHREN ZUR HERSTELLUNG EINES AUS LITHIUMSILIKAT-GLASKERAMIK BESTEHENDEN FORMKÖRPERS SOWIE FORMKÖRPER
PROCÉDÉ POUR LA PRODUCTION D'UN CORPS DE COFFRAGE COMPRENANT OU CONTENANT UNE VITROCÉRAMIQUE À SILICATE DE LITHIUM AINSI QUE DES CORPS DE COFFRAGE

(30) Priority: 05.02.2015 DE 102015101691
(43) Date of publication of application: 10.08.2016
(73) Proprietor: DENTSPLY SIRONA Inc., York, PA 17401-2991 (US)
(72) Inventor: WONDRACZEK, Lothar, 07743 Jena (DE); FECHER, Stefan, 63867 Johannesberg (DE); VOELKL, Lothar, 63773 Goldbach (DE)
(74) Representative: Pichova, Vanda

(56) References cited:
- WO-A1-2012/175615
- WO-A1-2015/056900
- DE-A1- 19 750 794
- DE-U1-202011 110 343
- H Fischer ET AL: "Improvement of Strength Parameters of a Leucite-reinforced Glass Ceramic by Dual-ion Exchange INTRODUCTION", J Dent Res, 1 January 2001 (2001-01-01), pages 336-339, XP055260127, Retrieved from the Internet: URL:http://jdr.sagepub.com/content/80/1/33 6.full.pdf
- HORST FISCHER ET AL: "Suppression of subcritical crack growth in a leucite-reinforced dental glass by ion exchange", JOURNAL OF BIOMEDICAL MATERIALS RESEARCH, vol. 66A, no. 4, 15 September 2003 (2003-09-15), pages 885-889, XP055260203, US ISSN: 0021-9304, DOI: 10.1002/jbm.a.10051
- Horst Fischer ET AL: "Chemical strengthening of a dental lithium disilicate glass-ceramic material", Journal of Biomedical Materials Research Part A, vol. 87A, no. 3, 1 December 2008 (2008-12-01), pages 582-587, XP055083908, ISSN: 1549-3296, DOI: 10.1002/jbm.a.31798

## Description

The invention relates to a method for the production of a medical, preferably dental, form body, or part thereof comprising or containing lithium silicate glass ceramic, in particular a bridge, crown, cap, inlay, onlay or veneer. The invention also relates to a fom1 body in the form of a medical, especially dental, object or a part thereof, in particular a bridge, crown, cap, inlay, onlay or veneer, comprising or containing a lithium silicate glass ceramic.

The use of lithium silicate glass ceramic for blanks for the manufacture of dental restorations has proven itself in dental technology for reasons of strength and biocompatibility. An advantage is that if a lithium silicate blank contains lithium metasilicate as the main crystal phase, then machine working is possible without difficulty, without high tool wear. Upon subsequent heat treatment, in which the product is transformed into a lithium disilicate glass ceramic, a high strength results. Good optical properties and an adequate chemical stability also result. Corresponding methods are disclosed, for example, in DE 197 50 794 A1 or DE 103 36 913 B4.

To achieve a high strength while at the same time good translucency, it is known for at least one stabilizer from the group zirconium oxide, hafnium oxide or a mixture thereof, in particular zirconium oxide, to be added to the starting materials in the form of lithium carbonate, quartz, aluminum oxide etc., i.e., the usual starting components. Attention is drawn here, for example, to DE 10 2009 060 274 A1, WO 2012/175450 A1, WO 2012/175615 A1, WO 2013/053865 A2 or EP 2 662 342 A1.

DE 197 50 794A1 teaches a method for the production of shaped translucent lithium disilicate to provide glass ceramic products that have a high chemical stability, a low defect density and a high translucency with good mechanical properties and have further processing by compression in the plastic state a little reaction with the used show the investment material, and the glass-ceramic products also in form of blanks made with a low degree of crystallization can be done in a simple way by machine loading work, such as machining processes, shaped in the desired manner and by subsequent heat treatment to a high strength lass ceramic product can be converted.

DE 20 2011 110343 discloses a glass ceramic which can be coated onto a zirconium oxide ceramic in particular by pressing it on in the viscous state and in the process forms a coating substantially free of cracks and flaws. Moreover, the glass ceramic should be capable of forming a solid bond with the zirconium oxide ceramic to be coated, and it should have visual and mechanical properties enabling it to be used in particular as a coating material for dental restorations but also as a material for preparing dental restorations.

WO 2012/175615 A1 refers to a method for producing a dental restoration comprising a lithium silicate glass or glass ceramic as well as a dental restoration inself. The invention further refers to a ingot with the same composition having a defined strength.

H. Ficher ET AL : 'Improvement of Strength Parameters of a Leucite-reinforced Glass Ceramic by Dual-ion Exchange' discloses an innovative dual ion-exchange process which can improve the limited strength and the scatter-in-strength of technical glasses. The objective of was to prove whether such a two-stage ion-exchange process can also improve the limited strength and the problematic scatter-in-strength of dental ceramic materials. It was concluded that the dual-exchange process may help significantly to increase the clinical reliability of glass-ceramic dental restorations, because the strength and the scatter-in-strength will be substantially improved by this treatment.

Horst Fischer ET AL: 'Suppression of subcritical crack growth in a leucite-reinforced dental glass by ion exchange' examines the effect of a single and a dual ion-exchange process on the characteristic time-dependent strength decrease of a leucite-reinforced dental glass.

WO 2015/056900 relates to a lithium silicate glass or a lithium silicate crystallized glass to be placed on the upper end of zirconia, and a preparation method therefor, and more specifically, to a lithium silicate glass or a lithium silicate crystallized glass with remarkable transmittancy and toning properties to be placed on the upper end of a zirconia substructure, framework or coping having remarkable mechanical strength, and a preparation method therefor.

The object of the present invention is to develop a method of the type described above such that simple process technology measures allow the strength of the form body to be increased compared to the prior art.

The object is substantially met according to the invention in that a preform body with a geometry that corresponds to the form body is produced from a glass melt of the following composition in percentage by weight:
- SiO₂ 52 - 70,
- nucleating agent
   P₂O₅ 3 - 8,
- Al₂O₃ 0.5 - 5,
- Li₂O 13 - 22,
- K₂O 0.5 - 8,
- Na₂O 0-0.5,
- ZrO₂ 4-16,
- CeO₂ 0.5 - 8,
- Tb₄O₇ 0.5 - 6,
- optionally an oxide or a number of oxides of an earth alkali metal or a number of earth alkali metals of the group magnesium, calcium, strontium and barium
   0 - 10,
- optionally an oxide or a number of oxides from the group boron oxide, tin oxide and zinc oxide
   0-7,
wherein the total sum is 100% by weight, and comprising or containing a lithium silicate glass ceramic, in said preform body a surface compressive stress is created by replacement of lithium ions with alkali ions of greater diameter, wherein after substitution of the ions the preform body is used as the form body containing a glass phase in the range 20-65% by volume.

The term form body thereby embraces a possible subsequent working, for example in the dental applications veneering of a crown or bridge.

Surprisingly, it was found that when the lithium ions present in the preform body of lithium silicate glass ceramic were replaced by the larger alkali ions, a pre-stress and thus a surface compressive stress are created to a degree that a substantial increase in strength results.

It was also surprisingly found that the corrosion resistance increased at the same time. It was thus found that in addition to an increase in strength through ion exchange, wherein flexural strengths of, in particular, more than 500 MPa are attained, as determined using the three-point bending measurement method specified in DIN EN ISO 6872-2009-01, an improvement in chemical resistance is achieved which - also determined by the method given in DIN EN ISO 6872-2009-1 - exhibited a chemical solubility of < 95 µg × cm⁻².

The use of Na, K, Cs and/or Rb as alkali ions is preferred to generate the surface compressive stress.

In particular it is intended for the preform body to be annealed in a melt containing alkali ions. The melt may contain ions of one alkali metal or of a number of alkali metals.

It is thereby in particular provided for the melt to contain elements, dissolved in the melt, that impart color to the preform body. These may be one or more lanthanides with an atomic number between 58 and 70, preferably cerium, praseodymium, terbium or erbium.

However, vanadium, manganese, iron, yttrium or antimony may also be used to provide color.

The elements are in particular in salt form, so that they are dissolved in the melt containing alkali ions, so that the color-imparting elements diffuse from the liquid phase into the glass ceramic.

In particular the required exchange between lithium ions and potassium ions is ensured if the preform body is annealed in a melt containing potassium ions. Preferred salt melts are KNO₃, KCl or K₂CO₃ salt melts.

The invention is characterized in a preferred manner in that the preform body is annealed in a melt containing potassium ions, in particular a melt containing KNO₃, KCl or K₂CO₃, or in a melt containing sodium ions, in particular in a melt containing NaNO₃, or in a melt containing a mixture of potassium ions and sodium ions, in particular in a ratio of 50:50 mol%, preferably in a melt containing NaNO₃ and KNO₃.

The required ion exchange in the surface region is particularly good when the preform body is annealed at a temperature T ≥ 300 °C, in particular 350 °C ≤ T ≤ 600 °C, preferably 430 °C ≤ T ≤ 530 °C, for a time t ≥ 5 minutes, in particular 0.5 h ≤ t ≤ 10 h, especially preferred 3 h ≤ t ≤ 8 h.

Shorter annealing times in the region of up to 30 minutes are in principle sufficient to achieve the desired surface compressive stress in the surface region. If, however, a strengthening in the form body down to a depth of 20 µm or more is desired, then longer annealing times of, for example, 6 or 10 hours are required, depending on the annealing temperature.

Independently thereof, the form body available after annealing, in particular tooth replacement, is not subjected to a further temperature treatment, or if so then the temperature is below 200 °C.

In a preferred embodiment, the preform body is fabricated from a glass melt, which as starting components contains at least SiO₂, Al₂O₃, Li₂O, K₂O, at least one nucleating agent, such as P₂O₅, and at least one stabilizer such as ZrO₂.

The invention is also characterized in a way to be emphasized in that the lithium ions are not only replaced by larger alkali ions, in particular potassium and/or sodium ions, but in that at least one dissolved stabilizer, in the form of ZrO₂, is contained in the glass phase of the form body to increase strength in the starting substance, wherein the preferred percentage by weight lies in the range 8 - 12, relative to the starting composition.

Prior to the ion exchange the preform body has the geometry of the form body to be provided such as a bridge, crown, cap, inlay, onlay or veneer. The preform body may - as is usual in the dental field - be subjected to glaze firing before the ion exchange is carried out.

The invention is characterized in particular in that the preform body is produced from a glass melt of the following composition in percentage by weight:
- SiO₂ 56 - 61
- nucleating agent such as
   P₂O₅ 4 - 7
- Al₂O₃ 1.5 - 3.2
- Li₂O 14 - 21
- K₂O 1.0-2.5
- Na₂O 0.2 - 0.5
- ZrO₂ 6 - 14, especially 8 - 12
- CeO₂ 1.0 - 2.5
- Tb₄O₇ 1.0 - 2.0
- optionally an oxide or a number of oxides of an earth alkali metal or a number of earth alkali metals of the group magnesium, calcium, strontium and barium
   0-5,
- optionally an oxide or a number of oxides from the group boron oxide, tin oxide and zinc oxide
   0-5,
wherein the total sum is 100% by weight.

"Optionally an oxide or a number of oxides" means that it is not absolutely necessary for one or a number of oxides to be contained in the glass melt.

In particular the preform body has the following composition in percentage by weight:

| | |
|---|---|
| SiO₂ | 58.1 ± 2.0 |
| P₂O₅ | 5.0 ± 1.5 |
| Al₂O₃ | 4.0 ± 2.5 |
| Li₂O | 16.5 ± 4.0 |
| K₂O | 2.0 ± 0.2 |
| ZrO₂ | 10.0 ± 0.5 |
| CeO₂ | 0-3, preferably 1.5 ± 0.6 |
| Tb₄O₇ | 0-3, preferably 1.2 ± 0.4, |
| Na₂O | 0 - 0.5, preferably 0.2 - 0.5 |

wherein the total sum is 100% by weight.

The invention is characterized in that a blank is formed from the glass melt during cooling or after cooling to room temperature, with the said blank subjected to at least a first heat treatment W1 at a temperature T_{W1} over a time period t_{W1}, wherein 620 °C ≤ T_{W1} ≤ 800 °C, in particular 650 °C ≤ T_{W1} ≤ 750 °C, and/or 1 minute ≤ t_{W1} ≤ 200 minutes, preferably 10 minutes ≤ t_{W1} ≤ 60 minutes. The preform body is derived from the blank / heat-treated blank.

The first heat-treatment phase results in nucleation and formation of lithium metasilicate crystals. A corresponding lithium silicate glass ceramic blank can be worked without difficulty, with minimal wear of the tool. A corresponding blank can also be pressed into a desired geometry.

In particular to achieve a final crystallization, in particular to form lithium disilicate crystals / transform the metasilicate crystals into disilicate crystals, it is provided that after the first heat treatment W1 the lithium silicate glass ceramic blank is subjected to a second heat treatment W2 at a temperature T_{W2} over a time period t_{W2}, wherein 800°C ≤ T_{W2} ≤ 1040 °C, preferably 800 °C ≤ T_{W2} ≤ 900 °C, and/or 2 minutes ≤ t_{W2} ≤ 200 minutes, preferably 3 minutes ≤ t_{W2} ≤ 30 minutes.

The heat treatment steps leading to a pre-crystallization / final crystallization preferably have the following temperature values and heating rates. With regard to the first heat treatment W1 this is in particular performed in two stages, wherein a first holding stage lies between 640 °C and 680 °C and a second holding stage lies between 720 °C and 780 °C. In each stage the heated molded part is held for a period of time, in the first stage preferably between 35 and 45 minutes, and in the second stage preferably between 15 and 25 minutes.

After the preform body has been derived from the blank, through grinding or milling, either after the first heat treatment step, or after the second heat treatment step, preferably however after the second heat treatment step, i.e., it has the geometry of the form body to be produced, without generally requiring further working, the corresponding body, referred to as preform body, is annealed in a salt melt containing alkali ions, in particular potassium ions, to achieve the desired surface compressive stress. An annealing in a salt melt containing sodium ions, or a mixture of sodium ions and potassium ions is also possible.

The salt melt may contain color-imparting additives, wherein these in particular may be salts of one or more of the lanthanides from cerium to ytterbium (atomic numbers 58 to 70) and/or one or a number of salts of elements of the group vanadium, manganese, iron, yttrium and antimony.

After removal from the salt melt, cooling and the removal of any residue of the salt melt and to a certain extent necessary working of the form body so derived, this can be used to the extent desired, in particular as a dental restoration. As a result of the increase in strength, the form body may be a multi unit bridge.

Specimens of corresponding form bodies, upon testing, were found to have flexural strength values above 400 MPa, in particular above 500 MPa. The values were determined using the three-point bending method given in DIN EN ISO 6872:2009-1.

In the hydrolysis test specified in DIN EN ISO 6872:2009-1 they had a chemical solubility of < 100 µg × cm⁻². Consequently, the method according to the invention not only increases the strength of the form body, it also increases its resistance to corrosion.

A form body of the aforementioned type is characterized in that the form body is produced from a glass melt that is of the following composition in percentage by weight

| | | |
|---|---|---|
| - | SiO₂ | 52 - 70, |
| - | nucleating agent such as | |
| | P₂O₅ | 3 - 8, |
| - | Al₂O₃ | 0.5 - 5, |
| - | Li₂O | 13 - 22, |
| - | K₂O | 0.5 - 8, |
| - | Na₂O | 0 - 0.5, |
| - | ZrO₂ | 4 - 16, |
| - | CeO₂ | 0.5 - 8, |
| - | Tb₄O₇ | 0.5 - 6, |
| - | optionally an oxide or a number of oxides of an earth alkali metal or a number of earth alkali metals from the group magnesium, calcium, strontium, barium | |
| | 0 - 10, | |
| - | optionally an oxide or a number of oxides from the group boron oxide, tin oxide, zinc oxide | |
| | 0 - 7, | |

wherein the total sum is 100% by weight, the form body contains a glass phase in the range 20-65% by volume, and a surface compressive stress is created in the form body by replacement of lithium ions with alkali ions of greater diameter.

"Optionally one oxide or a number of oxides" means that it is not essential for one or more oxides to be present in the glass melt.

Preferably the form body is produced from a glass melt that is of the following composition in percentage by weight

| | | |
|---|---|---|
| - | SiO₂ | 56 - 61 |
| - | nucleating agent such as | |
| | P₂O₅ | 4 - 7 |
| - | Al₂O₃ | 1.5 - 3.2 |
| - | Li₂O | 14 - 21 |
| - | K₂O | 1.0 - 2.5 |
| - | Na₂O | 0.2 - 0.5 |
| - | ZrO₂ | 6 - 14, especially 8 - 12 |
| - | CeO₂ | 1.0 - 2.5 |
| - | Tb₄O₇ | 1.0 - 2.0 |
| - | optionally an oxide or a number of oxides of an earth alkali metal or a number of earth alkali metals from the group magnesium, calcium, strontium, barium | |
| | | 0 - 5, |
| - | optionally an oxide or a number of oxides from the group boron oxide, tin oxide, zinc oxide | |
| | | 0 - 5, |

wherein the total sum is 100% by weight.

The preform body in particular has the following composition in percentage by weight:

| | |
|---|---|
| SiO₂ | 58.1 ± 2.0 |
| P₂O₅ | 5.0 ± 1.5 |
| Al₂O₃ | 4.0 ± 2.5 |
| Li₂O | 16.5 ± 4.0 |
| K₂O | 2.0 ± 0.2 |
| ZrO₂ | 10.0 ± 0.5 |
| CeO₂ | 0-3, preferably 1.5 ± 0.6 |
| Tb₄O₇ | 0-3, preferably 1.2 ± 0.4, |
| Na₂O | 0 - 0.5, preferably 0.2 - 0.5 |

wherein the total sum is 100% by weight.

Corresponding form bodies are characterized by a high strength. At the same time the starting composition results in a translucent product that has a high chemical resistance.

According to the invention the glass phase of the form body lies in the range in particular 40-60% by volume.

The invention is characterized consequently by a form body in which the percentage by volume of the lithium silicate crystals lies in the range 35-80, in particular in the range 40-60. Here, lithium silicate crystals refers to the sum of lithium disilicate crystals, lithium metasilicate crystals and lithium phosphate crystals.

In particular the form body is characterized in that the percentage of the alkali ions replacing the lithium ions, in particular with the use of potassium ions, starting from the surface extending to a depth of 10 µm is in the range 5 - 20% by weight. At a depth of 8 - 12 µm from the surface the alkali ion percentage should be in the range 5 - 10% by weight. At a layer depth between 12 and 14 µm from the surface the percentage of alkali ions should be in the range 4 - 8% by weight. At a depth from the surface of between 14 and 18 µm the percentage of alkali ions is in the range 1 - 3% by weight. The percentage by weight of the alkali ions decreases from layer to layer.

As mentioned, with the values in this instance the percentage by weight of the alkali ions present in the preform body is not taken into consideration. The numerical values hold in particular for potassium ions.

Further details, advantages and characteristics of the invention are derived not just from the claims, or from the characteristics to be drawn from these - alone and/or in combination - but also from the examples below.

For all tests at least the raw materials, such as lithium carbonate, quartz, aluminum oxide and zirconium oxide, were mixed in a drum mixer, until a uniform mass was reached when assessed visually. The compositions according to data supplied by the manufacturers used in the examples are given below.

The following apply in principle for the examples below:
The mass was melted in a crucible resistant to high temperature made from a platinum alloy at a temperature of 1500 °C for 5 hours. The melt was then poured into molds to derive rectangular bodies (blocks). The blocks then underwent a two-stage heat treatment referred to as a first heat treatment step to form lithium metasilicate crystals as the main crystal phase (1st treatment step). The blocks were heated at a heating rate of 2 K/minute to 660 °C in the first heat treatment stage W1 and held at that temperature for 40 minutes. They were then heated further to 750 °C at a heating rate of 10 K/minute. The specimens were then held at this temperature for 20 minutes. This heat treatment influences nucleation and results in the formation of lithium metasilicate crystals.

The blocks were then subjected to a second heat treatment step W2 (2nd treatment step) to form lithium disilicate crystals as the main crystal phase. In this heat treatment step the blocks were maintained at a temperature T₂ for a period of time t₂. The corresponding values are given below. The blocks were then cooled to room temperature.

Bending rods (specimens) were then derived from the cooled blocks through machine working (3rd treatment step), specifically through grinding of the blocks. The bending rods had a length of 15 mm, a width of 4.1 mm and a height of 1.2 mm. The edges of some of the specimens were rounded off through the use of silicon carbide abrasive paper with a grit of 1200. A Struers Knuth rotor grinder was used for grinding. The specimens were ground on the sides (4th treatment step). Here too a SiC abrasive paper with a grit of 1200 was used. A few further specimens were also subjected to glaze firing (5th treatment step) without applying material. This glaze firing, designated the third heat treatment step, was carried out at a temperature T₃ for a holding period t₃. The purpose of the glaze firing is to seal any cracks on the surface.

The three-point bending measurements were carried out as specified in DIN EN ISO 6872:2009-01. The specimens (rods) were mounted on two supports at a distance of 10 mm apart. A test stamp was used for the test and had a tip with a radius of 0.8 mm acting on the specimen.

The specimens were also subjected to a hydrolysis test as specified in DIN EN ISO 6872:2009-01.

### Example 1 (lithium silicate glass ceramic according to the invention)

The following starting composition (in percentage by weight) was used to carry out a number of test series in accordance with the instructions of the manufacturer, to derive lithium silicate glass and therefrom lithium silicate glass ceramic material.

| | |
|---|---|
| SiO₂ | 58.1 - 59.1 |
| P₂O₅ | 5.8 - 5.9 |
| Al₂O₃ | 1.9 - 2.0 |
| Li₂O | 18.5 - 18.8 |
| K₂O | 1.9 - 2.0 |
| ZrO₂ | 9.5 - 10.5 |
| CeO₂ | 1.0 - 2.0 |
| Tb₄O₇ | 1.0 - 1.5 |
| Na₂O | 0 - 0.2 |

The glass phase lay in the range 40 - 60% by volume.

### a) Test series #1

A total of 20 rods were produced first, and subjected to treatment steps 1 to 5. The final crystallization (second heat treatment step) was carried out at a temperature T₂ = 830 °C for a holding time t₂ = 5 minutes. The glaze firing (treatment step 5) was carried out at a temperature T₃ = 820 °C with a holding period t₃ = 4 minutes.

Ten of these rods were included in the three-point bending test without further treatment. The mean value obtained was 322 MPa.

The remaining ten rods were then annealed in a technically pure KNO₃ salt bath at a temperature of 480 °C for 1 hour. The rods were then removed from the melt. The remaining melt residue was removed using warm water. The three-point bending measurements were then carried out as explained above. The mean three-point bending value was 750 MPa.

### b) Test series #2

In a second test series 20 rods were derived by the method used for test series #1. The ten rods that were included in the three-point bending measurements immediately after glaze firing had a mean three-point flexural strength value of 347 MPa. The remaining 10 rods were then annealed in a technically pure KNO₃ melt at a temperature of 480 °C for 10 hours. This yielded a mean flexural strength of 755 MPa.

### c) Test series #3

The chemical solubility of rods derived by the same method as for the first test series was determined as specified in DIN EN ISO 6872:2009-01, both for rods that were annealed in a KNO₃ melt and for rods without such annealing. The rods which were not annealed in the potassium ion melt had a starting value of 96.35 µg × cm⁻².

The chemical solubility of the annealed rods was 90.56 µg × cm⁻².

### d) Test series #4

Rods were then derived from the aforementioned starting materials but were only subjected to treatment steps 1, 2 and 3, so that there was no rounding off of the edges, or polishing or glaze firing. Of the 20 rods produced, the three-point flexural strength was measured for 10 of them. The mean value obtained was 187 MPa. The remaining 10 rods were then annealed in a technically pure KNO₃ salt melt at a temperature of 580 °C for 10 hours. The mean three-point flexural strength was 571 MPa.

### e) Test series #5

Twenty rods of a lithium silicate material of the aforementioned composition were prepared, wherein treatment steps 1 to 4 were carried out, i.e., without glaze firing. The mean flexural strength value for 10 of the tested rods not annealed was 233 MPa. The remaining 10 rods were then annealed in a NaNO₃ melt for 20 minutes at 480 °C. The rods had a flexural strength of 620 MPa.

The examples showed that all specimens had an increase in strength of more than 100%, irrespective of whether the rods were annealed in an alkali ion melt with a good mechanical preparation (test series a), b), e)) or without a good mechanical preparation (test series d)).

With respect to the deviations in the starting values, i.e., without annealing, it should be noted that the specimens were derived from different batches of starting materials with the same classification, which can have deviations in their composition, as indicated by the ranges of values given.

### Example #2 (lithium silicate glass ceramic according to the invention)

In accordance with the statements made at the start, a lithium silicate material of the following composition in percentage by weight was melted:

| | |
|---|---|
| SiO₂ | 56.0 - 59.5 |
| P₂O₅ | 4.0 - 6.0 |
| Al₂O₃ | 2.5 - 5.5 |
| Li₂O | 13.0 - 15.0 |
| K₂O | 1.0 - 2.0 |
| ZrO₂ | 9.5 - 10.5 |
| CeO₂ | 1.0 - 2.0 |
| Tb₄O₇ | 1.0 - 1.2 |
| Na₂O | 0.2 - 0.5 |

The percentage of glass phase was in the range 40 - 60% by volume.

The melted material was poured into a mold made from platinum to derive pellets (round rods) and they were then pressed in a dental furnace for pressing ceramics. A press mold with a cavity of rectangular shape was formed using an embedding compound to make specimen rods available so that measurements could be carried out according to Example 1. The dimensions of the rods corresponded to those of test series a) to e). The material was pressed into the press mold at a temperature of 860 °C for 30 minutes. The 25 rods were then removed from the press mold using aluminum oxide particles of mean diameter 110 µm with a jet pressure between 1 and 1.5 bar to reduce the likelihood of damage to a minimum. The edges were then rounded off and the surfaces polished according to the test series a), b) and e) (4th treatment step). No glaze firing was carried out (5th treatment step). Specimens were therefore derived correspondingly, of which half were subjected to flexural strength measurement in accordance with DIN EN ISO 6872:2009-01. The remaining specimens were annealed in an alkali ion melt.

### f) Test series #6

The edges of ten specimens were rounded off and the surfaces polished. These specimens had a mean flexural strength of 264 MPa. Ten specimens were then annealed in a technically pure KNO₃ salt melt at 420 °C for 10 hours. The mean flexural strength was 464 MPa.

### g) Test series #7

Ten specimens had a mean flexural strength of 254 MPa. Ten specimens were then annealed in a technically pure KNO₃ salt melt at 500 °C for 10 hours. The mean flexural strength was 494 MPa.

### h) Test series #8

Ten specimens that had not been annealed had a mean flexural strength of 204 MPa. A further ten specimens were annealed in a technically pure NaNO₃ melt at 480 °C for 10 minutes. The mean flexural strength was 475 MPa.

The deviation in the starting strength values is attributable to the different batches and nature of manufacture of the specimens.

### Example #3 (glass ceramic of the state of the art)

Commercial pellets for pressing in a dental furnace for pressing ceramics were used. According to the data of the manufacturer the pellets had the following composition in percentage by weight:

| | |
|---|---|
| SiO₂ | 65.0 - 72.0 |
| P₂O₅ | 2.5 - 5.0 |
| Al₂O₃ | 1.5 - 3.5 |
| Li₂O | 12.0 - 15.5 |
| K₂O | 3.0 - 4.0 |
| ZrO₂ | 0 - 1.5 |
| CeO₂ | 0.5 - 2.3 |
| Tb₄O₇ | 0.5 - 1.0 |
| Na₂O | 0 - 0.1 |

The glass phase percentage was in the range 5-15% by volume.

The corresponding pellets were pressed in the dental furnace at 920 °C for 30 minutes. This was followed by the fourth treatment step of rounding off the edges and polishing.

### i) Test series #9

Measurements involving 10 specimens yielded a mean flexural strength of 422 MPa.

Ten specimens were annealed in a technically pure NaNO₃ melt for 20 minutes at 480 °C. The mean flexural strength after annealing was 355 MPa.

### Example #4 (glass ceramic according to the state of the art)

Commercially available blocks of lithium silicate ceramic with a composition according to the data of the manufacturer in percentage by weight as follows:

| | |
|---|---|
| SiO₂ | 65.0 - 72.0 |
| P₂O₅ | 2.5 - 5.0 |
| Al₂O₃ | 1.5 - 3.5 |
| Li₂O | 12.0 - 15.5 |
| K₂O | 3.0 - 4.0 |
| ZrO₂ | 0 - 1.5 |
| CeO₂ | 0.5 - 2.3 |
| Tb₄O₇ | 0.5 - 1.0 |
| Na₂O | 0 - 0.1 |

Glass phase percentage by volume: 5 - 15.

According to Example 1, to obtain specimen rods with dimensions according to Example I the blocks (form bodies) were grinded, followed by rounding off of the edges and polishing of the surfaces in a third and fourth treatment step.

A final crystallization through heating of the specimens to 850 °C for 10 minutes was carried out to obtain lithium disilicate crystals as the main crystal phase in the specimens.

### j) Test series #10

Flexural strength measurements of the aforementioned nature were carried out for ten specimens. A mean value of 352 MPa was found. Ten further specimens were annealed in a technically pure KNO₃ melt for 10 hours at a temperature of 480 °C. The mean flexural strength was 594 MPa.

### k) Test series #11

Twenty further specimens were prepared from the corresponding batch, wherein the same treatment steps were carried out, including the final crystallization, but with the exception of the 4th treatment step, so that there was no good mechanical preparation of the specimens (no polishing or rounding off of the edges).

Ten of the specimens so prepared had a mean flexural strength of 331 MPa. Ten specimens were annealed in a KNO₃ melt at 480 °C for 10 hours. The mean flexural strength was 477 MPa.

### l) Test series #12

Specimens were prepared as described for test series #10. The ten specimens that were not annealed had a mean flexural strength of 381 MPa. Ten specimens were annealed in a technically pure NaNO₃ melt at 480 °C for 20 minutes. The mean flexural strength was then 348 MPa.

A comparison of the examples / test series shows that, at a low total alkali oxide content in the glass phase of the specimens, i.e., after crystallization was carried out, and with a high glass percentage in the ceramic material lithium ions can be replaced by other alkali ions of greater diameter to a sufficient degree, so that the desired surface compressive stress is achieved with the consequence that there is an increase in strength. At the same time an improved chemical resistance was observed. These effects were reduced or not seen at all if the percentage of the glass phase in the form bodies used, i.e., the specimens, was below 20%, in particular below 15%, as is evident from examples 3 and 4. A possible cause - possibly independent of the percentage of the glass phase - is that the alkali oxide content, i.e., the content of sodium oxide and potassium oxide, in the glass phase is more than 2.5% by weight, in particular more than 3% by weight, of the starting composition. The percentage of Li₂O in the starting composition is also likely to have an influence, i.e., a higher percentage of lithium ions enables a greater substitution of sodium oxide and potassium oxide for lithium ions, so that the surface compressive stress is increased.

A possible explanation is as follows. The ion exchange that causes the surface compressive stress occurs at the interface between the glass ceramic specimen and the salt melt, wherein the process is controlled through the diffusion of alkali ions of the glass ceramic. Lithium ions diffuse from the glass ceramic to the surface and are replaced by alkali ions from the salt melt, and alkali ions from the salt melt diffuse after exchange with lithium ions from the surface into the inner part of the glass ceramic. With a high glass phase percentage in the lithium silicate glass ceramic and before annealing relatively low percentage of potassium ions and sodium ions in the glass phase, the motive force and thus the potential for ion exchange is higher / more effective compared to glass ceramic materials in which the glass phase percentage is low and the original alkali ion percentage (sodium oxide and potassium oxide) in the glass phase is relatively high.

This could be additionally intensified through the higher lithium ion percentage in the glass phase, i.e., the lithium ion percentage that is not bound in precipitations and that is therefore available for ion exchange. The precipitations are Li-Si and Li-P precipitations.

Further measurements carried out with lithium silicate glass ceramic specimens revealed that the percentage of the alkali ions replacing the lithium ions starting from the surface extending to a depth of 10 µm is in the range 5 - 20% by weight, at a depth of 8 - 12 µm from the surface the alkali ion percentage is in the range 5 - 10% by weight, at a layer depth between 12 and 14 µm from the surface the percentage of alkali ions is in the range 4 - 8% by weight, at a depth from the surface of between 14 and 18 µm the percentage of alkali ions is in the range 1 - 3% by weight, wherein the percentage by weight of the alkali ions decreases from layer to layer.

Disregarding the deposition of potassium ions compared to the specimens that had not been annealed in a salt melt containing potassium ions, there were no recognizable differences in microstructure, as scanning electron microscope studies showed.

The increase in strength as a result of the creation of surface compressive stress allowed the fabrication of three-unit bridges which had the requisite strength for use in patients. The bridges were fabricated according to the specimens described previously with good mechanical preparation and glaze firing. The preform body was derived from the blank after the first heat treatment step through milling.

## Claims

1. Method for the production of a medical, preferably dental, form body or part thereof comprising or containing a lithium silicate glass ceramic, in particular a bridge, crown, cap, inlay, onlay or veneer,
wherein
a preform body with a geometry that corresponds to the form body is produced from a glass melt of the following composition in percentage by weight:
| | | |
|---|---|---|
| - | SiO₂ | 52 - 70, |
| - | nucleating agent | |
| | P₂O₅ | 3 - 8, |
| - | Al₂O₃ | 0.5 - 5, |
| - | Li₂O | 13 - 22, |
| - | K₂O | 0.5 - 8, |
| - | Na₂O | 0 - 0.5, |
| - | ZrO₂ | 4 - 16, |
| - | CeO₂ | 0.5 - 8, |
| - | Tb₄O₇ | 0.5 - 6, |
| - | optionally an oxide or a number of oxides of an earth alkali metal or a number of earth alkali metals of the group magnesium, calcium, strontium and barium | |
| | 0 - 10, | |
| - | optionally an oxide or a number of oxides from the group boron oxide, tin oxide and zinc oxide | |
| | 0 - 7, | |
wherein the total sum is 100% by weight, and comprising or containing a lithium silicate glass ceramic, in said preform body a surface compressive stress is created by replacement of lithium ions with alkali ions of greater diameter, wherein after substitution of the ions the preform body is used as the form body containing a glass phase in the range 20-65% by volume.

2. Method according to claim 1,
wherein
as alkali ions Na ions, K ions, Cs ions and/or Rb ions are used for creation of the surface compressive stress.

3. Method according to claim 1 or 2,
wherein
the preform body is annealed in a melt containing alkali ions, and that especially the melt contains one or more elements that impart color to the preform body, preferably one or more lanthanides with an atomic number between 58 and 70, preferably cerium, praseodymium, terbium or erbium, is/are used as coloring element or elements, or preferably the at least one color-imparting element is an element of the group vanadium, manganese, iron, yttrium and antimony, and that especially the at least one color-imparting element is dissolved in the melt containing alkali ions.

4. Method according to at least one of the foregoing claims,
wherein
the preform body is annealed in a melt containing potassium ions, in particular a melt containing KNO₃, KCl or K₂CO₃, or in a melt containing sodium, in particular in a melt containing NaNO₃, or in a melt containing a mixture of potassium ions and sodium ions, in particular in a ratio of 50:50 mol%, preferably in a melt containing NaNO₃ and KNO₃, especially the preform body is annealed at a temperature T where T ≥ 300 °C, in particular 350 °C ≤ T ≤ 600 °C, preferably 430 °C ≤ T ≤ 530 °C, for a time t, in particular with t ≥ 5 minutes, preferably 0.5 h ≤ t ≤ 10 h, especially preferred 3 h ≤ t ≤ 8 h.

5. Method according to at least one of the foregoing claims,
wherein
the preform body is produced from a glass melt of the following composition in percentage by weight:
| | | |
|---|---|---|
| - | SiO₂ | 56 - 61 |
| - | nucleating agent such as | |
| | P₂O₅ | 4 - 7 |
| - | Al₂O₃ | 1.5 - 3.2 |
| - | Li₂O | 14 - 21 |
| - | K₂O | 1.0 - 2.5 |
| - | Na₂O | 0.2 - 0.5 |
| - | ZrO₂ | 6 - 14, especially preferred 8 - 12 |
| - | CeO₂ | 1.0 - 2.5 |
| - | Tb₄O₇ | 1.0 - 2.0 |
| - | optionally an oxide or a number of oxides of an earth alkali metal or a number of earth alkali metals of the group magnesium, calcium, strontium and barium | |
| | | 0 - 5, |
| - | optionally an oxide or a number of oxides from the group boron oxide, tin oxide and zinc oxide | |
| | | 0 - 5, |
wherein the total sum is 100% by weight.

6. Method according to at least one of the foregoing claims,
wherein
the glass melt contains as starting components the following constituents in percentage by weight
| | |
|---|---|
| SiO₂ | 58.1 ± 2.0 |
| P₂O₅ | 5.0 ± 1.5 |
| Al₂O₃ | 4.0 ± 2.5 |
| Li₂O | 16.5 ± 4.0 |
| K₂O | 2.0 ± 0.2 |
| ZrO₂ | 10.0 ± 0.5 |
| CeO₂ | 0-3, preferably 1.5 ± 0.6 |
| Tb₄O₇ | 0-3, preferably 1.2 ± 0.4, |
| Na₂O | 0 - 0.5, preferably 0.2 - 0.5 |
wherein the total sum is 100% by weight.

7. Method according to at least one of the foregoing claims
wherein
a blank is formed from the glass melt during cooling or after cooling to room temperature, with the said blank subjected to at least a first heat treatment W1 at a temperature T_{W1} over a time period t_{W1}, wherein 620 °C ≤ T_{W1} ≤ 800 °C, in particular 650 °C ≤ T_{W1} ≤ 750 °C, and/or 1 minute ≤ t_{W1} ≤ 200 minutes, preferably 10 minutes ≤ t_{W1} ≤ 60 minutes, especially the first heat treatment W1 is carried out in two stages, wherein in particular in the first stage a temperature T_{St1} of 630 °C ≤ T_{St1} ≤ 690 °C and/or in the second stage a temperature T_{St2} of 720 °C ≤ T_{St2} ≤ 780 °C is set and/or the heat-up rate A_{St1} up to the temperature T_{St1} is 1.5 K/min ≤ A_{St1} ≤ 2.5 K/min and/or the heat-up rate A_{St2} up to the temperature A_{St2} is 8 K/min ≤ A_{St2} ≤ 12 K/min.

8. Method according to claim 7
wherein
following the first heat treatment W1 the lithium silicate glass ceramic blank is subjected to a second heat treatment W2 at a temperature T_{W2} over a time period t_{W2} wherein 800 °C ≤ T_{W2} ≤ 1040 °C, preferably 800 °C ≤ T_{W2} ≤ 870 °C, and/or 2 minutes ≤ t_{W2} ≤ 200 minutes, preferably 3 minutes ≤ t_{W2} ≤ 30 minutes.

9. Method according to claim 8
wherein
after one of the heat treatment steps, in particular after the first heat treatment step, the preform body is derived from the blank through grinding and/or milling.

10. Form body in the form of a medical, in particular dental, object or part thereof, in particular a bridge, crown, cap, inlay, onlay, veneer comprising or containing a lithium silicate glass ceramic
wherein
the form body is produced from a glass melt that is of the following composition in percentage by weight
| | | |
|---|---|---|
| - | SiO₂ | 52 - 70, |
| - | nucleating agent such as | |
| | P₂O₅ | 3 - 8, |
| - | Al₂O₃ | 0.5 - 5, |
| - | Li₂O | 13 - 22, |
| - | K₂O | 0.5 - 8, |
| - | Na₂O | 0 - 0.5, |
| - | ZrO₂ | 4 - 16, |
| - | CeO₂ | 0.5 - 8, |
| - | Tb₄O₇ | 0.5 - 6, |
| - | optionally an oxide or a number of oxides of an earth alkali metal or a number of earth alkali metals from the group magnesium, calcium, strontium, barium | |
| | 0 - 10, | |
| - | optionally an oxide or a number of oxides from the group boron oxide, tin oxide, zinc oxide | |
| | 0 - 7, | |
wherein the total sum is 100% by weight, the form body contains a glass phase in the range 20-65% by volume, and a surface compressive stress is created in the form body by replacement of lithium ions with alkali ions of greater diameter.

11. Form body according to claim 10,
wherein,
the alkali ions are Na ions, K ions, Cs ions and/or Rb ions, in particular Na ions or K ions, or Na ions and K ions.

12. Form body according to claim 10 or 11,
wherein
the form body is produced from a glass melt that is of the following composition in percentage by weight
| | | |
|---|---|---|
| - | SiO₂ | 56 - 61 |
| - | nucleating agent such as | |
| | P₂O₅ | 4 - 7 |
| - | Al₂O₃ | 1.5 - 3.2 |
| - | Li₂O | 14 - 21 |
| - | K₂O | 1.0 - 2.5 |
| - | Na₂O | 0.2 - 0.5 |
| - | ZrO₂ | 6 - 14, especially preferred 8 - 12 |
| - | CeO₂ | 1.0 - 2.5 |
| - | Tb₄O₇ | 1.0 - 2.0 |
| - | optionally an oxide or a number of oxides of an earth alkali metal or a number of earth alkali metals from the group magnesium, calcium, strontium, barium | |
| | | 0 - 5, |
| - | optionally an oxide or a number of oxides from the group boron oxide, tin oxide, zinc oxide | |
| | | 0 - 5, |
wherein the total sum is 100% by weight.

13. Form body according to claim 10 or 11,
wherein
the form body is produced from a glass melt that is of the following composition in percentage by weight:
| | |
|---|---|
| SiO₂ | 58.1 ± 2.0 |
| P₂O₅ | 5.0 ± 1.5 |
| Al₂O₃ | 4.0 ± 2.5 |
| Li₂O | 16.5 ± 4.0 |
| K₂O | 2.0 ± 0.2 |
| ZrO₂ | 10.0 ± 0.5 |
| CeO₂ | 0 - 3, preferably 1.5 ± 0.6 |
| Tb₄O₇ | 0 - 3, preferably 1.2 ± 0.4, |
| Na₂O | 0 - 0.5, preferably 0.2 - 0.5 |
with a total sum of 100% by weight.

14. Form body according to at least one of the claims 10 to 13,
wherein
the percentage of the alkali ions replacing the lithium ions starting from the surface extending to a depth of 10 µm is in the range 5 - 20% by weight, and/or at a depth of 8 - 12 µm from the surface the alkali ion percentage is in the range 5 - 10% by weight, and/or at a layer depth between 12 and 14 µm from the surface the percentage of alkali ions is in the range 4 - 8% by weight, and/or at a depth from the surface of between 14 and 18 µm the percentage of alkali ions is in the range 1 - 3% by weight, wherein the percentage by weight of the alkali ions decreases from layer to layer.

## Patentansprüche

1. Verfahren zur Herstellung eines medizinischen, vorzugsweise zahnmedizinischen Formkörpers oder eines Teils davon, umfassend oder enthaltend eine Lithiumsilikat-Glaskeramik, insbesondere eine Brücke, Krone, Kappe, ein Inlay, Onlay oder Veneer, wobei
ein Vorformkörper mit einer dem Formkörper entsprechenden Geometrie aus einer Glasschmelze mit folgender Zusammensetzung in Gewichtsprozent hergestellt wird:
| | | |
|---|---|---|
| - | SiO₂ | 52 - 70, |
| - | Nukleierungsmittel | |
| | P₂O₅ | 3 - 8, |
| - | Al₂O₃ | 0,5 - 5, |
| - | Li₂O | 13 - 22, |
| - | K₂O | 0,5 - 8, |
| - | Na₂O | 0 - 0,5, |
| - | ZrO₂ | 4 - 16, |
| - | CeO₂ | 0,5 - 8, |
| - | Tb₄O₇ | 0,5 - 6, |
| - | gegebenenfalls ein Oxid oder eine Anzahl von Oxiden eines Erdalkalimetalls oder eine Anzahl von Erdalkalimetallen aus der Gruppe Magnesium, Calcium, Strontium und Barium | |
| | 0 - 10, | |
| - | gegebenenfalls ein Oxid oder eine Anzahl von Oxiden aus der Gruppe Boroxid, Zinnoxid und Zinkoxid | |
| | 0 - 7, | |
wobei die Gesamtsumme 100 Gew.-% beträgt und eine Lithiumsilikat-Glaskeramik umfasst oder enthält, wobei in dem Vorformkörper eine Oberflächendruckspannung durch Austausch von Lithiumionen gegen Alkaliionen größeren Durchmessers erzeugt wird, wobei der Vorformkörper nach dem Austausch der Ionen als Formkörper verwendet wird, der eine Glasphase im Bereich von 20 - 65 Vol.-% enthält.

2. Verfahren nach Anspruch 1,
wobei
als Alkaliionen Na-Ionen, K-Ionen, Cs-Ionen und/oder Rb-Ionen zur Erzeugung der Oberflächendruckspannung verwendet werden.

3. Verfahren nach Anspruch 1 oder 2,
wobei
der Vorformkörper in einer Alkaliionen enthaltenden Schmelze geglüht wird, und wobei insbesondere die Schmelze ein oder mehrere Elemente enthält, die dem Vorformkörper Farbe verleihen, vorzugsweise ein oder mehrere Lanthaniden mit einer Ordnungszahl zwischen 58 und 70, vorzugsweise Cer, Praseodym, Terbium oder Erbium, als färbendes Element bzw. färbende Elemente verwendet wird bzw. werden, oder vorzugsweise das mindestens eine farbverleihende Element ein Element aus der Gruppe Vanadium, Mangan, Eisen, Yttrium und Antimon ist, und wobei insbesondere das mindestens eine farbverleihende Element in der alkaliionenhaltigen Schmelze gelöst ist.

4. Verfahren nach mindestens einem der vorhergehenden Ansprüche,
wobei
der Vorformkörper in einer Kaliumionen enthaltenden Schmelze, insbesondere einer KNO₃, KCl oder K₂CO₃ enthaltenden Schmelze, oder in einer Natriumionen enthaltenden Schmelze, insbesondere einer NaNO₃ enthaltenden Schmelze, oder in einer ein Gemisch aus Kalium- und Natriumionen enthaltenden Schmelze, insbesondere in einem Verhältnis von 50:50 mol%, vorzugsweise in einer NaNO₃ und KNO₃ enthaltenden Schmelze, geglüht wird, wobei insbesondere der Vorformkörper bei einer Temperatur T mit T ≥ 300 °C, insbesondere 350 °C ≤ T ≤ 600 °C, vorzugsweise 430 °C ≤ T ≤ 530 °C, für eine Zeit t, insbesondere mit t ≥ 5 Minuten, vorzugsweise 0,5 h ≤ t ≤ 10 h, besonders bevorzugt 3 h ≤ t ≤ 8 h, geglüht wird.

5. Verfahren nach mindestens einem der vorhergehenden Ansprüche,
wobei
der Vorformkörper aus einer Glasschmelze mit der folgenden Zusammensetzung in Gewichtsprozent hergestellt wird:
| | | |
|---|---|---|
| - | SiO₂ | 56 - 61 |
| - | Nukleierungsmittel wie etwa | |
| | P₂O₅ | 4 - 7 |
| - | Al₂O₃ | 1,5 - 3,2 |
| - | Li₂O | 14 - 21 |
| - | K₂O | 1,0 - 2,5 |
| - | Na₂O | 0,2 - 0,5 |
| - | ZrO₂ | 6 - 14, besonders bevorzugt 8 - 12 |
| - | CeO₂ | 1,0 - 2,5 |
| - | Tb₄O₇ | 1,0 - 2,0 |
| - | gegebenenfalls ein Oxid oder eine Anzahl von Oxiden eines Erdalkalimetalls oder eine Anzahl von Erdalkalimetallen aus der Gruppe Magnesium, Calcium, Strontium und Barium | |
| | | 0 - 5, |
| - | gegebenenfalls ein Oxid oder eine Anzahl von Oxiden aus der Gruppe Boroxid, Zinnoxid und Zinkoxid | |
| | | 0 - 5, |
wobei die Gesamtsumme 100 Gew.-% beträgt.

6. Verfahren nach mindestens einem der vorhergehenden Ansprüche,
wobei
die Glasschmelze als Ausgangskomponenten die folgenden Bestandteile in Gewichtsprozent enthält
| | |
|---|---|
| SiO₂ | 58,1 ± 2,0 |
| P₂O₅ | 5,0 ± 1,5 |
| Al₂O₃ | 4,0 ± 2,5 |
| Li₂O | 16,5 ± 4,0 |
| K₂O | 2,0 ± 0,2 |
| ZrO₂ | 10,0 ± 0,5 |
| CeO₂ | 0 - 3, vorzugsweise 1,5 ± 0,6 |
| Tb₄O₇ | 0 - 3, vorzugsweise 1,2 ± 0,4, |
| Na₂O | 0 - 0,5, vorzugsweise 0,2 - 0,5 |
wobei die Gesamtsumme 100 Gew.-% beträgt.

7. Verfahren nach mindestens einem der vorhergehenden Ansprüche,
wobei
aus der Glasschmelze während der Abkühlung oder nach der Abkühlung auf Raumtemperatur ein Rohling gebildet wird, wobei der Rohling mindestens einer ersten Wärmebehandlung W1 bei einer Temperatur T_{w1} über eine Zeitspanne t_{w1} unterzogen wird, wobei 620 °C ≤ T_{w1} ≤ 800 °C, insbesondere 650 °C ≤ T_{w1} ≤ 750 °C, und/oder 1 Minute ≤ t_{w1} ≤ 200 Minuten, vorzugsweise 10 Minuten ≤ t_{w1} ≤ 60 Minuten, wobei insbesondere die erste Wärmebehandlung W1 in zwei Stufen durchgeführt wird, wobei insbesondere in der ersten Stufe eine Temperatur T_{St1} von 630 °C ≤ T_{St1} ≤ 690 °C und/oder in der zweiten Stufe eine Temperatur T_{St2} von 720 °C ≤ T_{St2} ≤ 780 °C eingestellt wird und/oder die Aufheizgeschwindigkeit A_{St1} bis zur Temperatur T_{St1} 1,5 K/min ≤ A_{St1} ≤ 2,5 K/min und/oder die Aufheizgeschwindigkeit A_{St2} bis zur Temperatur A_{St2} 8 K/min ≤ A_{St2} ≤ 12 K/min beträgt.

8. Verfahren nach Anspruch 7,
wobei
nach der ersten Wärmebehandlung W1 der Lithiumsilikat-Glaskeramikrohling einer zweiten Wärmebehandlung W2 bei einer Temperatur T_{w2} über einen Zeitraum t_{w2} unterzogen wird, wobei das Folgende gilt: 800 °C ≤ T_{w2} ≤ 1040 °C, vorzugsweise 800 °C ≤ T_{w2} ≤ 870 °C, und/oder 2 Minuten ≤ t_{w2} ≤ 200 Minuten, vorzugsweise 3 Minuten ≤ t_{w2} ≤ 30 Minuten.

9. Verfahren nach Anspruch 8,
wobei
nach einem der Wärmebehandlungsschritte, insbesondere nach dem ersten Wärmebehandlungsschritt, der Vorformkörper durch Schleifen und/oder Fräsen aus dem Rohling herausgearbeitet wird.

10. Formkörper in Form eines medizinischen, insbesondere zahnmedizinischen Gegenstands oder eines Teils davon, insbesondere einer Brücke, Krone, Kappe, eines Inlays, Onlays, Veneers, umfassend oder enthaltend eine Lithiumsilikat-Glaskeramik wobei
der Formkörper aus einer Glasschmelze hergestellt ist, die in Gewichtsprozent die folgende Zusammensetzung aufweist
| | | |
|---|---|---|
| - | SiO₂ | 52 - 70, |
| - | Nukleierungsmittel wie etwa | |
| | P₂O₅ | 3 - 8, |
| - | Al₂O₃ | 0,5 - 5, |
| - | Li₂O | 13 - 22, |
| - | K₂O | 0,5 - 8, |
| - | Na₂O | 0 - 0,5, |
| - | ZrO₂ | 4 - 16, |
| - | CeO₂ | 0,5 - 8, |
| - | Tb₄O₇ | 0,5 - 6, |
| - | gegebenenfalls ein Oxid oder eine Anzahl von Oxiden eines Erdalkalimetalls oder einer Anzahl von Erdalkalimetallen aus der Gruppe Magnesium, Calcium, Strontium, Barium | |
| | 0 - 10, | |
| - | gegebenenfalls ein Oxid oder eine Anzahl von Oxiden aus der Gruppe Boroxid, Zinnoxid und Zinkoxid | |
| | 0 - 7, | |
- SiO₂ 52 - 70,
- P₂O₅ 3 - 8,
- Al₂O₃ 0,5 - 5,
- Li₂O 13-22,
- K₂O 0,5 - 8,
- Na₂O 0 - 0,5,
- ZrO₂ 4 - 16,
- CeO₂ 0,5 - 8,
- Tb₄O₇ 0,5 - 6,
- 0 - 10,
- gegebenenfalls ein Oxid oder eine Anzahl von Oxiden aus der Gruppe Boroxid, Zinnoxid, Zinkoxid
0-7,
wobei die Gesamtsumme 100 Gew.-% beträgt, der Formkörper eine Glasphase im Bereich von 20 - 65 Vol.-% enthält, und eine Oberflächendruckspannung in dem Formkörper durch Austausch von Lithiumionen gegen Alkaliionen größeren Durchmessers erzeugt wird.

11. Formkörper nach Anspruch 10
wobei,
die Alkaliionen Na-Ionen, K-Ionen, Cs-Ionen und/oder Rb-Ionen, insbesondere Na-Ionen oder K-Ionen, oder Na-Ionen und K-Ionen sind.

12. Formkörper nach Anspruch 10 oder 11,
wobei
der Formkörper aus einer Glasschmelze hergestellt ist, die in Gewichtsprozent die folgende Zusammensetzung aufweist
| | | |
|---|---|---|
| - | SiO₂ | 56 - 61 |
| - | Nukleierungsmittel wie etwa | |
| | P₂O₅ | 4 - 7 |
| - | Al₂O₃ | 1,5 - 3,2 |
| - | Li₂O | 14 - 21 |
| - | K₂O | 1,0 - 2,5 |
| - | Na₂O | 0,2 - 0,5 |
| - | ZrO₂ | 6 - 14, besonders bevorzugt 8 - 12 |
| - | CeO₂ | 1,0 - 2,5 |
| - | Tb₄O₇ | 1,0 - 2,0 |
| - | gegebenenfalls ein Oxid oder eine Anzahl von Oxiden eines Erdalkalimetalls oder einer Anzahl von Erdalkalimetallen aus der Gruppe Magnesium, Calcium, Strontium, Barium | |
| | | 0 - 5, |
| - | gegebenenfalls ein Oxid oder eine Anzahl von Oxiden aus der Gruppe Boroxid, Zinnoxid, Zinkoxid | |
| | | 0 - 5, |
wobei die Gesamtsumme 100 Gew.-% beträgt.

13. Formkörper nach Anspruch 10 oder 11,
wobei
der Formkörper aus einer Glasschmelze hergestellt ist, die in Gewichtsprozent die folgende Zusammensetzung aufweist:
| | |
|---|---|
| SiO₂ | 58,1 ± 2,0 |
| P₂O₅ | 5,0 ± 1,5 |
| Al₂O₃ | 4,0 ± 2,5 |
| Li₂O | 16,5 ± 4,0 |
| K₂O | 2,0 ± 0,2 |
| ZrO₂ | 10,0 ± 0,5 |
| CeO₂ | 0 - 3, vorzugsweise 1,5 ± 0,6 |
| Tb₄O₇ | 0 - 3, vorzugsweise 1,2 ± 0,4, |
| Na₂O | 0 - 0,5, vorzugsweise 0,2 - 0,5 |
mit einer Gesamtsumme von 100 Gew.-%.

14. Formkörper nach mindestens einem der Ansprüche 10 bis 13,
wobei
der Prozentsatz der die Lithiumionen ersetzenden Alkaliionen ausgehend von der Oberfläche bis zu einer Tiefe von 10 µm im Bereich von 5 - 20 Gew.-% liegt, und/oder in einer Tiefe von 8 - 12 µm von der Oberfläche der Alkaliionenanteil im Bereich von 5 - 10 Gew.-% liegt, und/oder in einer Schichttiefe zwischen 12 und 14 µm von der Oberfläche der Alkaliionenanteil im Bereich von 4 - 8 Gew.-% liegt, und/oder in einer Tiefe von der Oberfläche zwischen 14 und 18 µm der Alkaliionenanteil im Bereich von 1 - 3 Gew.-% liegt, wobei der Gewichtsanteil der Alkaliionen von Schicht zu Schicht abnimmt.

## Revendications

1. Méthode de production d'un corps de coffrage médical, de préférence dentaire, ou d'une partie de celui-ci comprenant ou contenant une vitrocéramique à silicate de lithium, en particulier un bridge, une couronne, une coiffe, un inlay, un onlay ou une facette,
dans lequel
un corps de précoffrage dont la géométrie correspond au corps de coffrage est produit à partir d'une masse de verre fondue de la composition suivante en pourcentages en poids :
| | | |
|---|---|---|
| - | SiO₂ | 52 à 70 |
| - | agent de nucléation | |
| | P₂O₅ | 3 à 8, |
| - | Al₂O₃ | 0,5 à 5, |
| - | Li₂O | 13 à 22, |
| - | K₂O | 0,5 à 8, |
| - | Na₂O | 0 à 0,5, |
| - | ZrO₂ | 0 à 0,5, |
| - | CeO₂ | 0,5 à 8, |
| - | Tb₄O₇ | 0,5 à 6, |
| - | éventuellement un oxyde ou un certain nombre d'oxydes d'un métal alcalinoterreux ou d'un certain nombre de métaux alcalinoterreux du groupe magnésium, calcium, strontium et baryum | |
| | 0 à 10, | |
| - | éventuellement un oxyde ou un certain nombre d'oxydes du groupe oxyde de bore, oxyde d'étain et oxyde de zinc | |
| | 0 à 7, | |
la somme totale valant 100 % en poids et comprenant ou contenant une vitrocéramique à silicate de lithium, dans ledit corps de précoffrage une contrainte de compression superficielle étant créée par remplacement des ions lithium par des ions alcalins de plus grand diamètre, après substitution des ions le corps de précoffrage servant de corps de coffrage contenant une phase vitreuse comprise entre 20 et 65 % en volume.

2. Méthode selon la revendication 1,
dans lequel
sous forme d'ions alcalins, des ions Na, des ions K, des ions Cs et/ou des ions Rb servent à créer la contrainte de compression superficielle.

3. Méthode selon la revendication 1 ou 2,
dans lequel
le corps de précoffrage est recuit dans une masse fondue contenant des ions alcalins, et où notamment la masse fondue contient un ou plusieurs éléments conférant une couleur au corps de précoffrage, de préférence un ou plusieurs lanthanides de numéro atomique compris entre 58 et 70, de préférence du cérium, du praséodyme, du terbium ou de l'erbium est/sont utilisé(s) comme élément(s) colorant(s) ou de préférence l'au moins un élément conférant une couleur est un élément du groupe vanadium, manganèse, fer, yttrium et antimoine et où notamment l'au moins un élément conférant une couleur est dissous dans la masse fondue contenant des ions alcalins.

4. Méthode selon au moins l'une des revendications précédentes,
dans lequel
le corps de précoffrage est recuit dans une masse fondue contenant des ions potassium, en particulier une masse fondue contenant KNO₃, KCI ou K₂CO₃, ou dans une masse fondue contenant du sodium, en particulier dans une masse fondue contenant NaNO₃, ou dans une masse fondue contenant un mélange d'ions potassium et d'ions sodium, en particulier selon un rapport de 50:50 % molaires, de préférence dans une masse fondue contenant NaNO₃ et KNO₃, le corps de précoffrage est en particulier recuit à une température T, où T ≥ 300 °C, en particulier 350 °C ≤ T ≤ 600 °C, de préférence 430 °C ≤ T ≤ 530 °C, pendant un temps t, en particulier avec t ≥ 5 minutes, de préférence 0,5 h ≤ t ≤ 10 h ou mieux 3 h ≤ t ≤ 8 h.

5. Méthode selon au moins l'une des revendications précédentes,
dans lequel
le corps de précoffrage est réalisé à partir d'un verre fondu de composition suivante en pourcentages pondéraux :
| | | |
|---|---|---|
| - | SiO₂ | 56 à 61 |
| - | agent de nucléation tel que | |
| | P₂O₅ | 4 à 7 |
| - | Al₂O₃ | 1,5 à 3,2 |
| - | Li₂O | 14 à 21 |
| - | K₂O | 1,0 à 2,5 |
| - | Na₂O | 0,2 à 0,5 |
| - | ZrO₂ | 6 à 14, ou mieux 8 à 12 |
| - | CeO₂ | 1,0 à 2,5 |
| - | Tb₄O₇ | 1,0 à 2,0 |
| - | éventuellement un oxyde ou un certain nombre d'oxydes d'un métal alcalinoterreux ou un certain nombre de métaux alcalinoterreux du groupe magnésium, calcium, strontium et baryum | |
| | | 0 à 5 |
| - | éventuellement un oxyde ou un certain nombre d'oxydes du groupe oxyde de bore, oxyde d'étain et oxyde de zinc | |
| | | 0 à 5, |
la somme totale valant 100 % en poids.

6. Méthode selon au moins l'une des revendications précédentes,
dans lequel
la masse de verre fondue contient comme composants de départ les constituants suivants en pourcentages en poids
| | |
|---|---|
| SiO₂ | 58,1 ± 2,0 |
| P₂O₅ | 5,0 ± 1,5 |
| Al₂O₃ | 4,0 ± 2,5 |
| Li₂O | 16,5 ± 4,0 |
| K₂O | 2,0 ± 0,2 |
| ZrO₂ | 10,0 ± 0,5 |
| CeO₂ | 0 à 3, de préférence 1,5 ± 0,6 |
| Tb₄O₇ | 0 à 3, de préférence 1,2 ± 0,4 |
| Na₂O | 0 à 0,5, de préférence 0,2 à 0,5 |
la somme totale valant 100 % en poids.

7. Méthode selon au moins l'une des revendications précédentes
dans lequel
une ébauche est formée à partir de la masse de verre fondue lors du refroidissement ou après refroidissement à température ambiante, ladite ébauche étant soumise à au moins un premier traitement thermique W1 à une température T_{w1} pendant une durée t_{W1}, dans lequel 620°C ≤ T_{w1} ≤ 800°C, en particulier 650°C ≤ T_{w1} ≤ 750°C et/ou 1 minute ≤ t_{w1} ≤ 200 minutes, de préférence 10 minutes ≤ t_{w1} ≤ 60 minutes, en particulier le premier traitement thermique W1 est effectué en deux étapes, dans lequel en particulier dans la première étape une température T_{St1} de 630°C ≤ T_{St1} ≤ 690°C et/ou dans la seconde étape une température T_{St2} telle que 720°C ≤ T_{St2} ≤ 780°C est réglée et/ou la vitesse de chauffage A_{St1} jusqu'à la température T_{St1} est telle que 1,5 K/min ≤ A_{St1} ≤ 2,5 K/min et/ou la vitesse de chauffage A_{St2} jusqu'à la température A_{St2} est telle que 8 K/min ≤ A_{St2} ≤ 12 K/min.

8. Méthode selon la revendication 7,
dans lequel
après le premier traitement thermique W1, l'ébauche de vitrocéramique à silicate de lithium est soumise à un second traitement thermique W2 à une température T_{w2} pendant une durée t_{w2} telles que 800°C ≤ T_{w2} ≤ 1 040°C, de préférence 800°C ≤ T_{w2} ≤ 870°C et/ou 2 minutes ≤ t_{w2} ≤ 200 minutes, de préférence 3 minutes ≤ t_{w2} ≤ 30 minutes.

9. Méthode selon la revendication 8,
dans lequel
après l'une des étapes de traitement thermique, notamment après la première étape de traitement thermique, on obtient le corps de précoffrage à partir de l'ébauche par meulage et/ou fraisage.

10. Corps de coffrage sous la forme d'un objet médical, en particulier dentaire, ou d'une partie de celui-ci, en particulier un bridge, une couronne, une coiffe, un inlay, un onlay, une facette comprenant ou contenant une vitrocéramique à silicate de lithium
dans lequel
le corps de coffrage est produit à partir d'une masse de verre fondue de la composition suivante en pourcentages en poids
| | | |
|---|---|---|
| - | SiO₂ | 52 à 70 |
| - | agent de nucléation tel que | |
| | P₂O₅ | 3 à 8, |
| - | Al₂O₃ | 0,5 à 5, |
| - | Li₂O | 13 à 22, |
| - | K₂O | 0,5 à 8, |
| - | Na₂O | 0 à 0,5, |
| - | ZrO₂ | 4 à 16, |
| - | CeO₂ | 0,5 à 8, |
| - | Tb₄O₇ | 0,5 à 6, |
| - | éventuellement un oxyde ou un certain nombre d'oxydes d'un métal alcalinoterreux ou un certain nombre de métaux alcalinoterreux du groupe magnésium, calcium, strontium, baryum | |
| | 0 à 10, | |
| - | éventuellement un oxyde ou un certain nombre d'oxydes du groupe oxyde de bore, oxyde d'étain, oxyde de zinc | |
| | 0 à 7, | |
la somme totale valant 100 % en poids, le corps de coffrage contenant une phase vitreuse comprise entre 20 et 65 % en volume et une contrainte de compression superficielle étant créée dans le corps de coffrage par remplacement des ions lithium par des ions alcalins de plus grand diamètre.

11. Corps de coffrage selon la revendication 10,
dans lequel
les ions alcalins sont des ions Na, des ions K, des ions Cs et/ou des ions Rb, notamment des ions Na ou des ions K, ou bien des ions Na et des ions K.

12. Corps de coffrage selon la revendication 10 ou 11,
dans lequel
le corps de coffrage est produit à partir d'une masse de verre fondue de la composition suivante en pourcentages en poids
| | | |
|---|---|---|
| - | SiO₂ | 56 à 61 |
| - | agent de nucléation tel que | |
| | P₂O₅ | 4 à 7 |
| - | Al₂O₃ | 1,5 à 3,2 |
| - | Li₂O | 14 à 21 |
| - | K₂O | 1,0 à 2,5 |
| - | Na₂O | 0,2 à 0,5 |
| - | ZrO₂ | 6 à 14, ou mieux 8 à 12 |
| - | CeO₂ | 1,0 à 2,5 |
| - | Tb₄O₇ | 1,0 à 2,0 |
| - | éventuellement un oxyde ou un certain nombre d'oxydes d'un métal alcalinoterreux ou un certain nombre de métaux alcalinoterreux du groupe magnésium, calcium, strontium, baryum | |
| | | 0 à 5 |
| - | éventuellement un oxyde ou un certain nombre d'oxydes du groupe oxyde de bore, oxyde d'étain, oxyde de zinc | |
| | | 0 à 5, |
dans lequel la somme totale vaut 100 % en poids.

13. Corps de coffrage selon la revendication 10 ou 11,
dans lequel
le corps de coffrage est produit à partir d'une masse de verre fondue de la composition suivante en pourcentages en poids :
| | |
|---|---|
| SiO₂ | 58,1 ± 2,0 |
| P₂O₅ | 5,0 ± 1,5 |
| Al₂O₃ | 4,0 ± 2,5 |
| Li₂O | 16,5 ± 4,0 |
| K₂O | 2,0 ± 0,2 |
| ZrO₂ | 10,0 ± 0,5 |
| CeO₂ | 0 à 3, de préférence 1,5 ± 0,6 |
| Tb₄O₇ | 0 à 3, de préférence 1,2 ± 0,4 |
| Na₂O | 0 à 0,5, de préférence 0,2 à 0,5 |
avec une somme totale de 100 % en poids.

14. Corps de coffrage selon au moins l'une des revendications 10 à 13,
dans lequel
le pourcentage d'ions alcalins remplaçant les ions lithium à partir de la surface s'étendant jusqu'à une profondeur de 10 µm est compris entre 5 et 20 % en poids, et/ou à une profondeur de 8 à 12 µm depuis la surface le pourcentage d'ions alcalins est compris entre 5 et 10 % en poids, et/ou à une profondeur de couche entre 12 et 14 µm depuis la surface, le pourcentage d'ions alcalins est compris entre 4 et 8 % en poids, et/ou à une profondeur depuis la surface comprise entre 14 et 18 µm, le pourcentage d'ions alcalins est compris entre 1 et 3 % en poids, le pourcentage en poids des ions alcalins diminuant de couche en couche.
